# FASCICULE DE BREVET EUROPEEN

(11) **EP 0 426 528 B1**
(45) Date de publication et mention de la délivrance du brevet: **17.08.1994**
(21) Numéro de dépôt: 90402988.1
(22) Date de dépôt: 24.10.1990
(51) Int. Cl.: B65G 63/00

(54) **Installation et procédé de manutention automatique de boîtes transportées par wagons de chemins de fer**
Einrichtung und Verfahren zum Handhaben von Behältern, die auf Eisenbahnwagen transportiert werden
Installation and procedure for handling containers transported on railway cars

(30) Priorité: 24.10.1989 FR 8913941
(43) Date de publication de la demande: 08.05.1991
(60) Demande divisionnaire: 93114706.0
(73) Titulaire: SOCIETE NATIONALE DES CHEMINS DE FER FRANCAIS, F-75436 Paris Cedéx 09 (FR)
(72) Inventeur: Guigon, Marc, F-77360 Vaires-sur-Marne (FR); Vogt, Pierre, F-91370 Verrières-le-Buisson (FR)
(74) Mandataire: Casalonga, Axel

(56) Documents cités:
- EP-A- 0 302 569
- DE-A- 2 102 624
- DE-A- 2 219 614
- FR-A- 2 096 448

## Description

La présente invention a pour objet une installation de manutention automatique de boîtes transportées par des wagons de chemins de fer ainsi qu'un procédé de manutention automatique de ces boîtes.

Les boîtes dont on va décrire la manutention dans la présente demande de brevet, peuvent être des conteneurs maritimes ou terrestres, des caisses mobiles ou des superstructures à gabarit ferroviaire, c'est-à-dire constituées par un wagon classique dont on a enlevé les bogies. Ces boîtes comportent en partie inférieure des dispositifs de liaison assurant le maintien des boîtes sur la plateforme d'un véhicule, notamment d'un véhicule ferroviaire tel qu'un wagon de marchandises.

La manutention de telles boîtes transportées par wagons de marchandises a été jusqu'à présent une opération relativement complexe et longue effectuée dans un chantier de transport combiné consistant à déplacer les boîtes entre une zone de stockage des boîtes ou des camions et des wagons de chemins de fer se trouvant sur une voie ferrée longeant la voie de stockage.

Les wagons sont ensuite acheminés, soit par des trains entiers entre chantiers de transport combiné lorsque les flux de trafic sont importants, soit par des trains passant dans des gares de triage lorsque les flux de trafic sont plus faibles, ce qui entraîne une perte de temps très importante sur l'acheminement des wagons et des chocs répétés sur les wagons transportant les boîtes, augmentant ainsi notablement les risques de détérioration des marchandises contenues dans les boîtes.

La manutention dans un chantier de transport combiné s'effectue, soit au moyen d'autogrues se déplaçant sur pneus à côté de la voie ferrée, soit au moyen de portiques se déplaçant sur des rails parallèlement à la voie ferrée sur laquelle se trouvent les wagons portant les boîtes, les portiques enjambant la voie ferrée.

Dans ces installations, l'autogrue ou le portique se déplace le long du train jusqu'à se trouver au-dessus d'une boîte déterminée. Un dispositif d'accrochage et de levage permet à l'autogrue ou au portique de saisir la boîte, soit par ses pièces de coin supérieures, soit par des zones de prises qui peuvent être situées dans la partie inférieure de la boîte. Une fois la boîte soulevée, elle est déplacée le long du portique perpendiculairement à la voie jusqu'à se trouver au-dessus de la zone de stockage.

Un autre exemple d'installation est décrit dans DE-A-2 102 624, et prévoit l'utilisation de plusieurs portiques répartis sur l'aire de manutention et pouvant se déplacer à la fois parallèlement et perpendiculairement à la voie ferrée.

De telles installations ne permettent pas d'assurer une manutention rapide et intégralement automatisée des boîtes.

La présente invention a pour objet une installation et un procédé de manutention automatique permettant une importante diminution de la durée de manutention et assurant en outre une possibilité d'automatisation complète de l'ensemble des opérations de manutention. Elle permet d'assurer le transfert des boîtes d'un train à un autre.

Telle que revendiquée, l'installation de manutention automatique de boîtes transportées par des wagons de chemins de fer, selon la présente invention, comprend au moins une voie ferrée principale longeant une zone de stockage de boîtes et des moyens de manutention mobiles capables de saisir les boîtes et de les déplacer entre les wagons se trouvant sur la voie ferrée principale et la zone de stockage. Selon l'invention, les moyens de manutention mobiles comprennent plusieurs ponts roulants capables de se déplaçer en translation uniquement perpendiculairement à la voie ferrée principale. Chaque pont roulant est équipé d'un palonnier à déplacement uniquement vertical, et muni d'une pluralité de dispositifs de préhension de boîtes. L'installation comprend en outre au moins une voie ferrée de service disposée parallèlement à la voie ferrée principale, et sur laquelle circulent une pluralité de navettes autonomes en vue du déplacement des boîtes d'un pont roulant à l'autre, ce déplacement se faisant donc uniquement parallèlement à la voie ferrée principale.

Il est possible, bien entendu, de prévoir plusieurs voies ferrées principales et plusieurs voies ferrées de service parallèles aux voies ferrées principales, chacune des voies ferrées de service permettant le déplacement d'une pluralité de navettes autonomes.

Des moyens de positionnement des wagons sont avantageusement prévus sur ou au voisinage de la voie ferrée principale, de façon à placer chaque wagon en position correcte en face d'un pont roulant déterminé. De cette manière, les différents wagons se trouvent positionnés avec une précision suffisante.

L'installation est divisée en plusieurs travées perpendiculaires à la voie ferrée principale, chaque travée correspondant à un wagon. Chaque travée comprend un pont roulant et plusieurs emplacements de stockage dans la zone de stockage.

Tous les wagons portant les boîtes et se déplaçant sur la voie ferrée principale ont de préférence la même longueur, qui correspond également à celle des navettes autonomes et à la largeur d'une travée.

Dans le cas où la voie ferrée principale est électrifiée et munie d'une caténaire, l'installation comprend, en outre, des moyens pour escamoter la caténaire pendant les opérations de manutention des boîtes. Un tel dispositif d'escamotage de la caténaire peut être placé sous les chemins de roulement des ponts roulants afin de déplacer latéralement la caténaire d'une distance suffisante, par exemple d'environ trois mètres, permettant ainsi aux ponts roulants de s'approcher jusqu'au-dessus des boîtes portées par les plateformes des wagons.

Les ponts roulants se déplacent quant à eux sur des chemins de roulement situés en hauteur, disposés perpendiculairement à la voie ferrée principale et écartés d'une distance sensiblement égale à la longueur d'un wagon. La commande de déplacement de chaque pont roulant peut se faire de façon automatique, le pont roulant recevant alors des signaux par radio, par câble ou des informations au moyen d'une boucle inductive. Le pont roulant peut alors se placer au-dessus d'un emplacement déterminé qu'il repère à l'aide de capteurs appropriés.

Des moyens de guidage du déplacement vertical des différents palonniers sont prévus à la fois sur le pont roulant lui-même et sur les wagons et les navettes autonomes. A cet effet, dans un mode de réalisation avantageux, les ponts roulants sont supportés par des montants verticaux munis de glissières capables de coopérer avec des patins de guidage escamotables pendant une partie du déplacement vertical du palonnier. Lorsque le palonnier est arrivé à proximité d'un wagon ou d'une navette autonome, les patins de guidage sont escamotés et le guidage se poursuit au moyen de bras de guidage solidaires du palonnier coopérant avec des guides de centrage prévus sur les wagons, les navettes autonomes et les emplacements àe stockage.

Chaque palonnier comprend, avantageusement, des paires de pinces pivotantes, de préférence au nombre de quatre, adaptées pour saisir les boîtes par leur face inférieure. La manutention des boîtes se fait àe préférence par des pièces intermédiaires amovibles de liaison et de manutention, capables de pénétrer d'une part dans les orifices des pièces de coin des boîtes et d'autre part dans des logements prévus sur les wagons, les navettes et les emplacements de stockage à des emplacements correspondant aux différentes dimensions des boîtes. A cet effet, on utilisera avantageusement les pièces intermédiaires qui font l'objet de la demande de brevet EP-A-0 425 370 intitulée "Pièce intermédiaire amovible de liaison et de manutention de boîte sur véhicule et véhicule adapté" appartenant à la demanderesse et déposée le même jour que la présente demande.

L'installation peut comprendre encore des moyens pour commander automatiquement le déplacement des différents ponts roulants et les positionner au-dessus d'un wagon ou d'une navette ou encore un emplacement de stockage déterminé, des moyens pour commander automatiquement le mouvement vertical des palonniers et le mouvement de pivotement des pinces de préhension et des moyens pour commander automatiquement le déplacement des navettes autonomes d'une travée à l'autre le long de la ou les voies ferrées de service.

Selon le procédé de manutention automatique de boîtes de l'invention, on saisit par le dessous la ou les boîtes se trouvant sur un wagon déterminé ou un emplacement de stockage choisi et on déplace la boîte uniquement perpendiculairement à la voie ferrée principale. On dépose la boîte sur un moyen de transport annexe capable de se déplacer parallèlement à la voie ferrée principale. On déplace le moyen de transport annexe en face de l'emplacement choisi de la zone de stockage ou du wagon et on saisit à nouveau la boîte par le dessous pour la déplacer uniquement perpendiculairement à la voie ferrée principale depuis le moyen de transport annexe jusqu'à l'emplacement choisi de la zone de stockage ou jusqu'au wagon déterminé. Ces opérations peuvent être faites dans un ordre différent selon les cas.

Pour permettre la manutention automatique de boîtes, on peut utiliser avantageusement un véhicule ferroviaire, par exemple un wagon tracté ou une navette autonome, comprenant une plateforme munie de chaque côté d'une série de logements adaptés pour recevoir de manière amovible des pièces intermédiaires de liaison et de manutention de boîtes. Chaque série de logements comprend au moins trois paires de logements écartées respectivement de trois distances entraxes, présentant un plus grand commun diviseur. Grâce à une telle structure, il devient possible de procéder à la manutention de boîtes de différentes tailles et de différents formats sur un tel véhicule ferroviaire.

L'invention sera bien comprise à l'étude d'un mode de réalisation détaillé pris à titre d'exemple nullement limitatif et illustré par les dessins annexés, sur lesquels :
la figure 1 est une vue de dessus schématique partielle d'une installation selon l'invention;
la figure 2 est une vue transversale schématique de l'ensemble de l'installation;
la figure 3 est une vue en perspective éclatée schématisant la pièce intermédiaire utilisée dans l'installation de l'invention, l'orifice inférieur de la boîte, les moyens de liaison solidaires de la plateforme du wagon et l'extrémité active d'une pince de préhension;
la figure 4 est une vue transversale partielle plus détaillée que la figure 2 illustrant un pont roulant et un palonnier en position basse au-dessus d'une navette ferroviaire;
la figure 5 est une vue longitudinale de l'ensemble illustré sur la figure 4, montrant les différentes pinces de préhension du palonnier, le pont roulant ayant été déplacé au-dessus d'un emplacement de stockage et le palonnier étant en position basse;
la figure 6 est une vue partielle de dessus du palonnier montrant les moyens de guidage verticaux;
la figure 7 est une vue en élévation du dispositif de positionnement des wagons;
la figure 8 est une vue de dessus du dispositif de positionnement de la figure 7; et
la figure 9 illustre schématiquement une plateforme de wagon utilisable dans l'installation de l'invention, montrant la position des pièces intermédiaires de liaison.

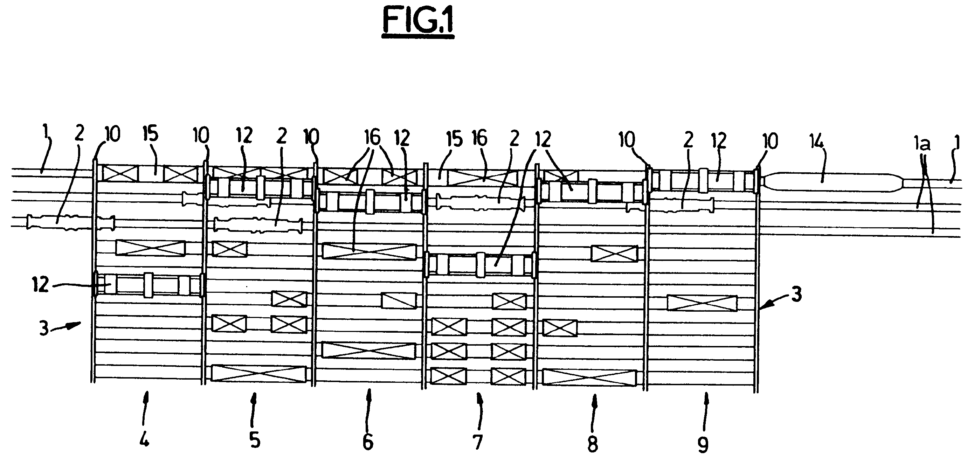

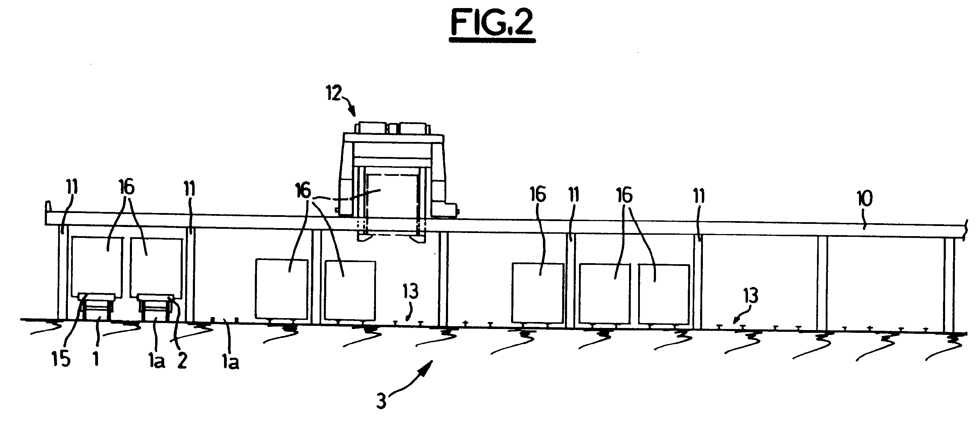

Telle qu'elle est illustrée sur les figures 1 et 2, l'installation de manutention automatique de boîtes, selon l'invention, comprend une voie ferrée principale 1, deux voies ferrées de service la disposées d'un même côté de la voie principale 1 et parallèles à celle-ci et une zone de stockage de boîtes 3 se trouvant au-delà des deux voies ferrées de service 1a, le long de celles-ci. Une pluralité de navettes ferroviaires autonomes 2 se déplacent le long de chaque voie ferrée de service 1a. L'installation, dans son ensemble, est divisée en plusieurs travées 4,5,6,7,8 et 9, perpendiculaires à la voie principale 1 et délimitées par des longerons 10 supportés par des montants verticaux 11, de façon à se trouver à une hauteur suffisante au-dessus du sol. Chaque travée 4 à 9 comporte un pont roulant référencé 12 dans son ensemble. Chaque pont roulant 12 se déplace sur deux chemins de roulement parallèles portés par les deux longerons 10 qui définissent la travée correspondante. Les ponts roulants 12 peuvent donc se déplacer en translation uniquement perpendiculairement à la voie ferrée principale 1 entre une position extrême où ils se trouvent au-dessus de ladite voie ferrée principale 1 et une deuxième position extrême sur le bord de la zone de stockage 3 à l'opposé de la voie 1. Les ponts roulants 12 peuvent occuper chaque position intermédiaire correspondant à un emplacement de stockage 13 de la zone de stockage 3 ou au-dessus de l'une des voies ferrées de service 1a.

Sur la voie ferrée principale peut se déplacer un convoi ferroviaire comportant une locomotive 14 et une pluralité de wagons 15 capables de recevoir sur leur plateforme des boîtes 16 de différentes tailles et de différents types, qu'il s'agisse de conteneurs maritimes ou terrestres, de caisses mobiles ou de superstructures à gabarit ferroviaire. Les wagons 15 ont tous la même longueur hors tout, par exemple environ 20 mètres. Ils peuvent être chargés, comme on peut le voir sur la figure 1, d'une seule boîte 16, de longueur égale à environ 12 mètres ou de deux boîtes 16, de longueur comprise entre 6 mètres et 9,125 mètres chacune, ces dimensions correspondant aux dimensions habituelles normalisées.

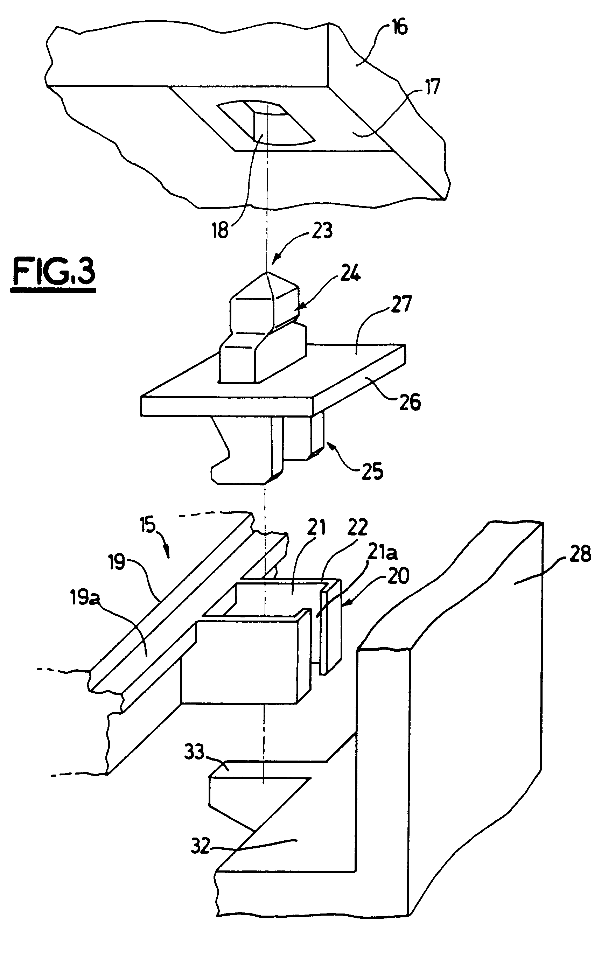

En se reportant à la vue en perspective éclatée de la figure 3, on voit que la boîte 16 présente dans ses coins inférieurs, des pièces de liaison 17 présentant une ouverture oblongue 18. La plateforme 19 du wagon 15 présente une surface horizontale plane dont les bords longitudinaux comportent ici un décrochement 19a. Le long de la bordure de la plateforme 19, sont disposés une pluralité de boîtiers 20 définissant des ouvertures traversantes 21, la face frontale supérieure 22 des boîtiers 20 se trouvant au même niveau que le décrochement 19a, c'est-à-dire à un niveau inférieur à celui de la plateforme 19. Une pièce intermédiaire amovible de liaison et de manutention, référencée 23 dans son ensemble, comprend une partie supérieure 24 en saillie vers le haut et une partie inférieure 25 en saillie vers le bas. Les parties supérieures 24 et inférieures 25 sont séparées par une semelle plane horizontale 26 dont l'épaisseur est égale à la valeur du décrochement entre le rebord 19a et la plateforme 19. Le profil de la partie supérieure 24 est adapté à celui de l'ouverture oblongue 18 de la boîte 16. De la même manière, la partie inférieure 25 est telle qu'elle puisse aisément pénétrer dans le boîtier 20 par son ouverture 21, la face inférieure de la semelle 26 reposant alors sur la face frontale supérieure 22 du boîtier 20, ainsi que sur le rebord 19a de la plateforme 19. La face supérieure 27 de la semelle 26 se trouve donc au même niveau que la plateforme 19. La boîte 16 repose alors à la fois sur la plateforme 19 et sur la face supérieure 27 des semelles 26 des différentes pièces intermédiaires qui assurent la liaison de la boîte 16 avec le wagon 15 pendant le transport de la boîte 16 sur ledit wagon. Le profil de la partie supérieure 24 des différentes pièces intermédiaires 23 est tel que la liaison boîte/wagon soit suffisante pour répondre aux sollicitations diverses pendant la circulation du wagon. La semelle 26 présente de chaque côté des zones de bordure une dimension suffisante pour déborder de chaque côté du boîtier 20 lorsque la pièce intermédiaire 23 est introduite dans le boîtier 20.

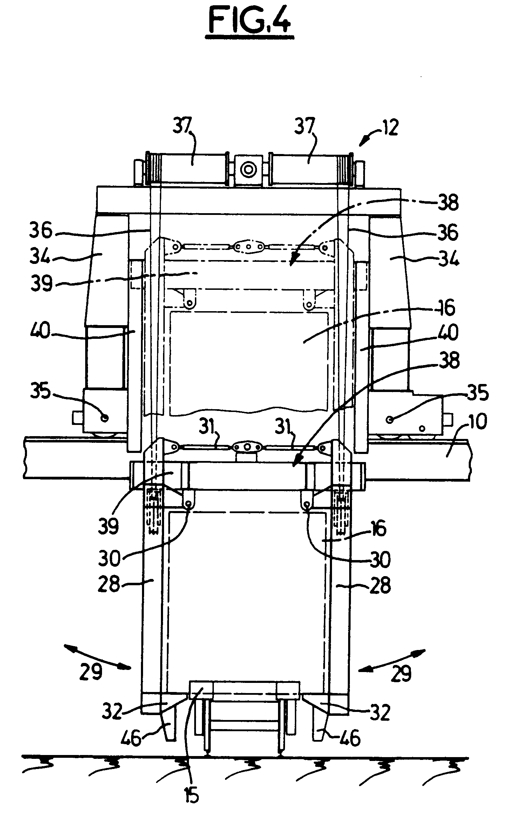

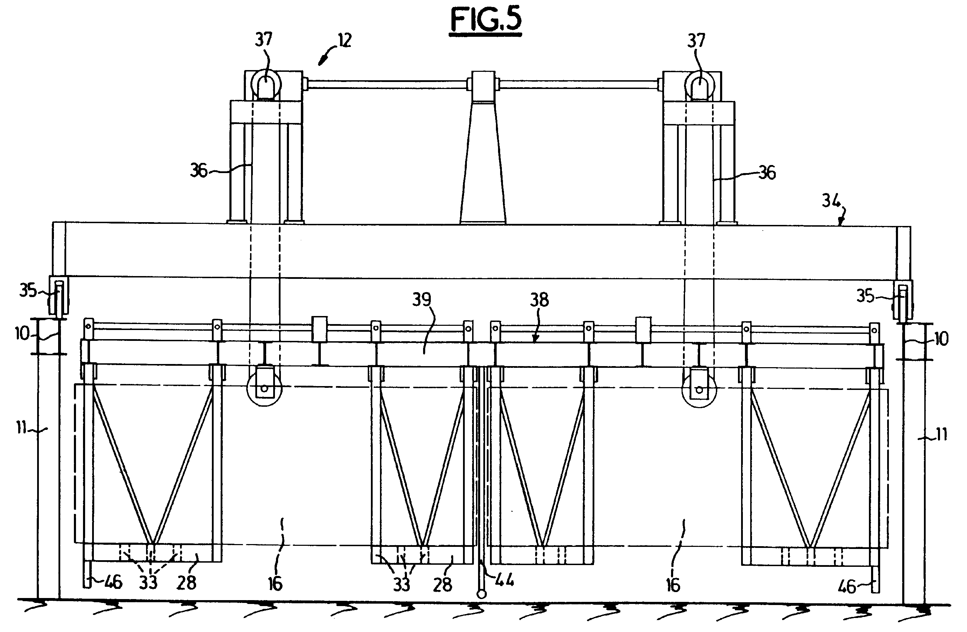

Pour procéder à la manutention de la boîte 16, on fait alors intervenir des pinces 28 également visibles sur la figure 4, qui peuvent pivoter dans le sens des flèches 29 (figure 4) autour d'axes 30 sous l'action d'une tringlerie 31. La partie inférieure 32 des pinces 28 peut venir s'engager sous chaque boîtier 20 d'une boîte 16. La partie inférieure 32 (figure 3) présente une pluralité de pattes de préhension 33 capables de pénétrer chacune dans un boîtier 20 par la fente 21a. Après éventuel déverrouillage de la pièce de liaison 23 par rapport au boîtier 20, les pièces de liaison 23 de la boîte 16 peuvent être soulevées par les pinces 28, la boîte 16 étant ensuite déplacée comme on va le voir. La disposition des pattes 33 sur chaque pince 28 est visible sur la figure 5.

En se reportant maintenant aux figures 4 et 5, on va décrire un exemple de réalisation d'un pont roulant 12. Tel qu'il est illustré, le pont roulant 12 comprend un bâti de support 34 capable de se déplacer sur les longerons 10 au moyen de galets 35 dont certains sont entraînés par un moteur non représenté sur la figure. L'écartement entre les différents montants verticaux 11 définissant l'une des travées 4 à 9, correspond également sensiblement à l'écartement entre les chemins de roulement des longerons 10. Cet écartement correspond sensiblement à la longueur d'un wagon 15, tous les wagons présentant la même longueur comme on l'a dit précédemment. Cet écartement correspond également sensiblement à la longueur de l'une des navettes autonomes 2 qui se déplace sur l'une ou l'autre des voies ferrées de service 1a. Dans ces conditions, chaque pont roulant 12 qui se déplace dans l'une des travées 4 à 9, correspond à un emplacement de wagon 15 et peut se déplacer uniquement perpendiculairement au déplacement du train sur la voie ferrée principale 1. La commande automatique du déplacement du pont roulant 12 peut être réalisée au moyen d'une boucle inductive, d'un câble à enrouleur ou par des signaux transmis par radio. Le pont roulant 12 peut alors se positionner au-dessus d'un emplacement déterminé à l'aide de capteurs non représentés sur les figures.

Le bâti 34 du pont roulant 12 supporte des moufles 36 dont les câbles viennent s'enrouler sur des treuils 37 et qui soutiennent un palonnier référencé 38 dans son ensemble. Le palonnier 38 comprend un cadre 39 dont la longueur est légèrement inférieure à celle d'un wagon 15. Quatre paires de pinces 28 sont montées par l'intermédiaire des axes de pivotement 30 sur le cadre 39. Comme on peut le voir sur la figure 5, deux paires de pinces 28 sont placées au voisinage des extrémités du cadre 38 et deux autres paires de pinces 28 sont placées au voisinage de l'axe transversal du cadre 38. Deux paires de pinces 28 situées dans une moitié du palonnier 38 peuvent être actionnées indépendamment des deux autres paires de pinces 28. Grâce à cela, il est possible de saisir, soit une petite boîte 16 de longueur comprise entre 6 et 9,125 mètres en extrémité de wagon, soit deux petites boîtes 16 de longueur comprise entre 6 et 9,125 mètres chacune, comme illustré en traits interrompus sur la figure 5, soit encore une seule grande boîte 16 de longueur supérieure ou sensiblement égale à 12 mètres.

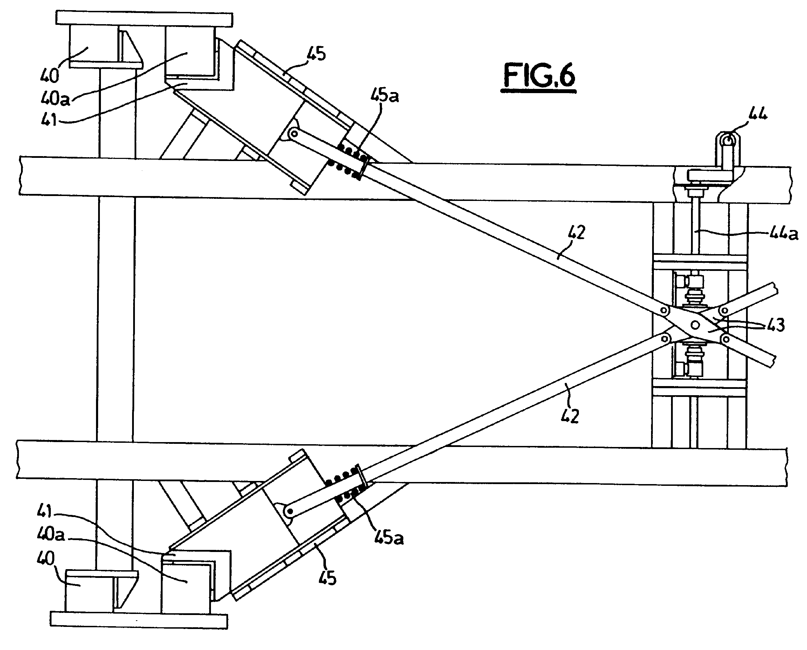

Le pont roulant 12 comprend, en outre, des guides verticaux 40 et 40a visibles en particulier sur la figure 6 qui est une vue de dessus partielle du palonnier 12. Des patins de guidage 41 sont montés à l'extrémité de bras 42 articulés sur deux axes centraux 43. Le mouvement vertical du palonnier 38 se trouve donc guidé, d'une part, par la coopération entre les guides verticaux 40 et le bâti et, d'autre part, entre les guides verticaux 40a et les patins de guidage 41. Une tige verticale 44 montée sensiblement au milieu du palonnier 38 est capable d'entrer en contact avec le sol, un wagon ou une navette autonome 2, afin de provoquer, par l'intermédiaire d'une tringlerie 44a, la rotation des axes 43, de façon à escamoter les patins de guidage 41 qui quittent le contact des guides verticaux 40a. En effet, la rotation de chaque axe 43 provoque une traction sur le bras 42 correspondant qui fait coulisser le patin 41 dans un manchon fixe 45 à l'encontre de la force d'un ressort 45a. La longueur de la tige 44 est telle que cette opération se produit un peu avant que le palonnier 38 soit arrivé en position de prise ou de dépose d'une boîte sur la plateforme d'un wagon. A ce moment, également les guides 40 cessent d'être en contact avec le bâti du palonnier 38, comme on le voit sur la figure 4. Lors de la poursuite du déplacenent vertical du palonnier 38, le guidage final se fait directement sur le wagon 15, la navette autonome 2 ou des guides appropriés fixés au sol aux emplacements de stockage. A cet effet, le wagon 15 ou la navette autonome 2 comportent des guides de centrage, non représentés sur les figures, placés de façon à pouvoir coopérer avec des bras de guidage 46 faisant saillie verticalement en-dessous des pinces 28. On assure ainsi un positionnement précis des pinces 28 et du palonnier 38 par rapport au wagon 15, à la navette autonome 2 ou à l'emplacement de stockage considéré. On comprendra, bien entendu, que la structure du pont roulant 12 et du palonnier 38 pourraît être différente.

Les navettes 2 peuvent être considérées comme des wagons à plateforme autonomes, dont les déplacements sur la voie ferrée de service respective la sont automatiques. Chaque navette 2 comporte à cet effet un moteur d'entraînement. Elle peut prendre ses informations à l'aide de boucles inductives ou par radio et se positionner à chaque emplacement précis à l'aide de capteurs non représentés sur les figures. Chaque voie de service 1a peut recevoir une pluralité de navettes ferroviaires autonomes.

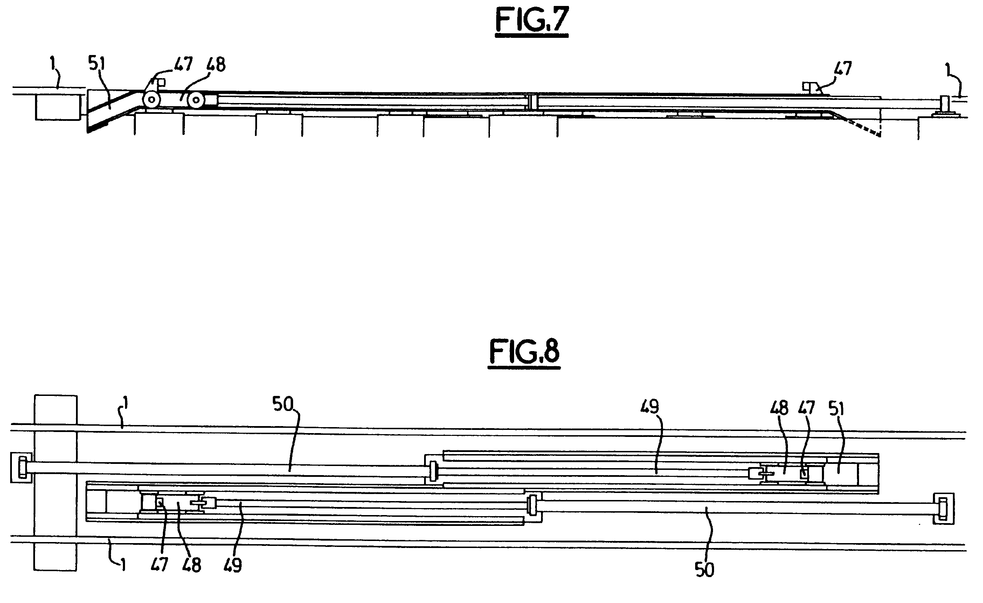

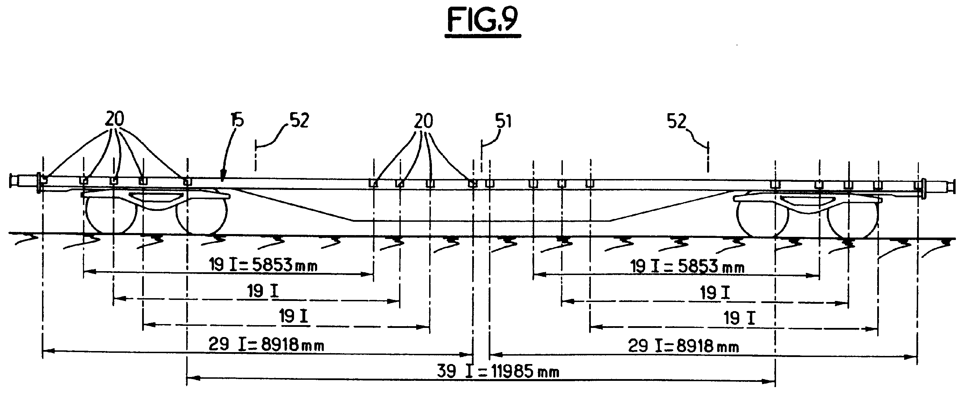

Le positionnement précis des wagons 15 peut se faire au moyen du dispositif de positionnement illustré sur les figures 7 et 8. Dans le mode de réalisation illustré, ce dispositif est placé au sol, entre les rails de la voie ferrée principale 1. Il comprend deux pattes de butée 47 montées chacune sur un chariot mobile 48 actionné par la tige 49 d'un vérin hydraulique 50. Chaque patte de butée 47 peut faire saillie vers le haut de façon à entrer en contact de butée avec un organe adapté, solidaire d'un wagon 15. Les deux vérins hydrauliques 50 sont disposés parallèlement l'un à l'autre entre les rails de la voie 1. Un déplacenent des deux pattes de butée 47 l'une vers l'autre à partir de leur position écartée illustrée sur les figures 7 et 8, leur permet de venir en butée sur l'organe de positionnement solidaire du wagon 15, de façon à placer celui-ci dans une position précise. Les pattes de butée 47 peuvent être escamotées lorsque leur chariot de support 48 est déplacé vers le bas dans un conduit incliné 51, afin de ne pas engager le gabarit ferroviaire des parties basses des wagons 15.

Un tel dispositif de positionnement des wagons 15 est placé à quelques emplacements sur la voie principale 1. Il suffit en effet que certains wagons 15 du train soient positionnés (par exemple, un wagon sur six) pour atteindre la précision requise pour l'ensemble des wagons 15, par exemple à plus ou moins 15 cm. On notera que lors de ce positionnement, l'ensemble du train se déplace, y compris la locomotive.

En se reportant à la figure 9, on voit, à titre d'exemple, un plan de chargement d'un wagon 15 permettant un centrage approximatif des boîtes 16 par rapport à un axe prédéterminé qui est, soit l'axe central 51, soit l'un des axes secondaires 52. Avec des boîtes normalisées, l'entraxe entre les pièces de fixation inférieures 17 des boîtes 16, peut être de 11985 mm pour une boîte de grandes dimensions, de 8918 mm pour une boîte intermédiaire et de 5853 mm pour une boîte de petites dimensions. Afin qu'un wagon 15 soit capable de recevoir tous les types de boîtes, l'invention prévoit de définir un plus grand diviseur commun pour les trois entraxes précédents. A titre d'exemple, on a illustré sur la figure 9 un plan de chargement réalisé à l'aide d'un plus grand diviseur commun pour l'intervalle I = 307,55 mm, permettant ainsi de définir les différents entraxes précités pour les boîtiers 20 au moyen des trois multiplicateurs 19,29 et 39.

Trois boîtiers 20 sont placés de chaque côté d'un axe secondaire 52, définissant ainsi trois positions possibles pour une boîte de petites dimensions, approximativement centrées sur l'axe 52.

Un autre boîtier 20 placé de chaque côté de l'axe 52 permet de définir la position d'une boîte intermédiaire centrée sur l'axe 52.

Enfin, un boîtier 20 est placé de chaque côté de l'axe central 51 pour définir la position d'une boîte de grandes dimensions centrée sur l'axe 51.

Bien entendu, d'autres plans de chargement pourraient être envisagés à titre de variante. On comprendra, en outre, que les navettes autonomes 2 présentent le même plan de chargement.

La disposition des différents boîtiers 20 correspond, bien entendu, à celle des pattes de préhension 33 sur les pinces 28 des différents palonniers 38.

On va maintenant décrire succinctement le fonctionnement de l'installation de l'invention.

Un train arrive sur la voie principale 1, il est composé d'une locomotive 14 diesel ou électrique et d'une pluralité de wagons 15. Les wagons 15 sont chargés de boîtes 16 (une ou deux boîtes par wagon). Le train s'arrête avec une précision de plus ou moins 3 mètres environ par rapport à un point d'arrêt théorique. Les wagons 15 sont ensuite positionnés plus précisément, grâce aux dispositifs de positionnement, par exemple présentant la structure illustrée sur les figures 7 et 8. A cet effet, le train n'est plus freiné après l'arrêt et la locomotive se trouve ainsi également positionnée. Si la voie principale 1 est électrifiée, la caténaire est tout d'abord déplacée latéralement à l'opposé de la zone de stockage 3, c'est-à-dire vers la partie supérieure de la figure 1. Les ponts roulants 12 des différentes travées 4 à 9, viennent se positionner au-dessus des wagons 15. Les palonniers 38 descendent en étant guidés tout d'abord par les guides verticaux 40 et 40a, puis par les bras de guidage 46 venant coopérer avec les guides de centrage des wagons 15. Les pinces 28 qui s'étaient préalablement ouvertes, viennent se fermer autour de la ou des boîtes de chaque wagon 15, le palonnier 38 de chaque pont roulant 12 est déplacé vers le haut emportant avec lui la ou les boîtes 16 ainsi que les pièces intermédiaires 23. Chaque pont roulant 12 vient ensuite placer la ou les boîtes 16 qu'il a saisies, soit sur une navette ferroviaire 2 qui s'est déplacée pour se trouver dans la même travée que le pont roulant 12 considéré, soit sur l'un des emplacements de stockage 13 de la zone de stockage 3. On notera que les emplacements de stockage 13 comportent des organes de réception analogues aux boîtiers 20 des wagons 15 et disposés de la même manière, afin de recevoir les boîtes 16 avec les pièces intermédiaires 23. Les mouvements inverses sont effectués pour assurer le rechargement du train.

Les navettes ferroviaires 2 assurent le déplacement des boîtes 16 parallèlement à la voie ferrée principale 1, pour positionner ces boîtes en face des emplacements réservés où elles seront rechargées dans les trains en correspondance, se déplaçant ensuite sur la voie principale 1, ou encore, où elles peuvent être reprises par un autre pont roulant 12 pour être déplacées dans une autre travée de la zone de stockage 3. Les ponts roulants 12 assurent les chargements et déchargements des navettes ferroviaires 2.

Lorsque toutes les manutentions des boîtes 16 sur le train considéré sont terminées, la caténaire est remise en place le cas échéant, étant entendu que ce déplacement de la caténaire qui se fait au moyen de dispositifs non représentés sur les figures, n'est pas nécessaire lorsque la voie principale 1 n'est pas électrifiée. Le train est alors prêt pour repartir.

L'ensemble des opérations permettant ainsi la manutention de toutes les boîtes 16 et le traitement d'un train, ne prend guère plus d'environ 10 minutes.

L'installation peut être avantageusement complétée par un système informatique de gestion, permettant de connaître les emplacements disponibles sur les trains, les emplacements et la nature des différentes boîtes 16 se trouvant sur les trains ou en stock dans la zone de stockage 3, la réservation d'emplacements sur le train, l'optimisation des mouvements des composants du chantier et une interface avec les opérateurs humains.

## Revendications

1. Installation de manutention automatique de boîtes (16) transportées par des wagons de chemins de fer (15), comprenant au moins une voie ferrée principale (1) longeant une zone de stockage (3) de boîtes et des moyens de manutention mobiles capables de saisir les boîtes et de les déplacer entre les wagons se trouvant sur la voie ferrée principale (1) et la zone de stockage (3), caractérisée par le fait que les moyens de manutention mobiles comprennent plusieurs ponts roulants (12) capables de se déplaçer en translation uniquement perpendiculairement à la voie ferrée principale (1), chaque pont roulant (12) étant équipé d'un palonnier (38) à déplacement uniquement vertical, et muni d'une pluralité de dispositifs de préhension (28) des boîtes (16) et que l'installation comprend en outre au moins une voie ferrée de service (1a) disposée parallèlement à la voie ferrée principale (1) et sur laquelle circulent une pluralité de navettes autonomes (2) en vue du déplacement des boîtes parallèlement à la voie ferrée principale (1) et d'un pont roulant à l'autre.

2. Installation de manutention automatique selon la revendication 1, caractérisée par le fait qu'elle comprend des moyens de positionnement (47) des wagons (15) disposés sur ou au voisinage de la voie ferrée principale (1) de façon à placer chaque wagon en face d'un pont roulant déterminé.

3. Installation de manutention selon les revendications 1 ou 2, caractérisée par le fait qu'elle est divisée en plusieurs travées (4 à 9) perpendiculaires à la voie ferrée principale (1) correspondant à chaque wagon (15), chaque travée comportant un pont roulant (12) et plusieurs emplacements de stockage dans la zone de stockage (3).

4. Installation de manutention selon la revendication 3, caractérisée par le fait que tous les wagons (15) ont la même longueur qui correspond également à celle des navettes autonomes (2) et à la largeur d'une travée (4 à 9).

5. Installation de manutention selon l'une quelconque des revendications précédentes, adaptée au cas d'une voie ferrée principale électrifiée munie d'une caténaire, caractérisée par le fait qu'elle comprend des moyens d'escamotage de la caténaire pendant les opérations de manutention des boîtes.

6. Installation de manutention selon l'une quelconque des revendications précédentes, caractérisée par le fait que les ponts roulants (12) se déplacent sur des chemins de roulement (10) situés en hauteur disposés perpendiculairement à la voie ferrée principale (1) et écartés d'une distance sensiblement égale à la longueur d'un wagon (15).

7. Installation de manutention selon l'une quelconque des revendications précédentes, caractérisée par le fait qu'elle comprend des moyens de guidage du déplacement vertical des palonniers, comprenant des glissières verticales (40a) capables de coopérer avec des patins de guidage escamotables (41) pendant une partie du déplacement vertical du palonnier, les wagons (15), les navettes autonomes (2) et les emplacements de stockage présentant des guides de centrage capables de coopérer avec des bras de guidage (46) solidaires des palonniers.

8. Installation selon l'une quelconque des revendications précédentes, caractérisée par le fait que chaque palonnier (38) comporte quatre paires de pinces pivotantes (28) adaptées pour saisir les boîtes (16) par leur face inférieure.

9. Installation de manutention selon la revendication 8, caractérisée par le fait que la manutention des boîtes (16) se fait par des pièces intermédiaires (23) capables de pénétrer d'une part dans les orifices (18) des pièces de coins (17) des boîtes (16), et d'autre part dans des logements (20) prévus sur les wagons (15), les navettes (2) et les emplacements de stockage à des emplacements correspondant aux différentes dimensions des boîtes (16).

10. Installation de manutention selon l'une quelconque des revendications précédentes, caractérisée par le fait qu'elle comprend des moyens pour commander automatiquement le déplacement des différents ponts roulants (12) et les positionner au-dessus d'un wagon, d'une navette ou d'un emplacement de stockage choisis; des moyens pour commander automatiquement le mouvement vertical des palonniers (38) et le mouvement de pivotement des pinces de préhension (28); et des moyens pour commander automatiquement le déplacement des navettes autonomes (2) d'une travée à l'autre.

11. Procédé de manutention automatique de boîtes transportées par wagons de chemins de fer se déplaçant sur au moins une voie ferrée principale (1) longeant une zone de stockage de boîtes, caractérisé par le fait que pour déplacer les boîtes (16) entre les wagons (15) et des emplacements choisis de la zone de stockage (3) :
- on saisit par le dessous la ou les boîtes (16) se trouvant sur un wagon déterminé ou à un emplacement de stockage choisi et on la déplace uniquement perpendiculairement à la voie ferrée principale (1);
- on dépose la boîte (16) sur un moyen de transport annexe (2) capable de se déplacer parallèlement à la voie ferrée principale (1);
- on déplace le moyen de transport annexe (2) en face de l'emplacement choisi de la zone de stockage ou du wagon déterminé; et
- on saisit à nouveau la boîte (16) par le dessous pour la déplacer uniquement perpendiculairement à la voie ferrée principale (1) depuis le moyen de transport annexe (2) jusqu'à l'emplacement choisi de la zone de stockage (3) ou le wagon (15) déterminé;
- ces opérations pouvant être effectuées dans un ordre différent.

12. Procédé de manutention selon la revendication 11, caractérisé par le fait que la saisie des boîtes se fait au moyen de pièces intermédiaires (23) capables de pénétrer, d'une part, dans les orifices (18) des pièces de coins (17) des boîtes (16) et, d'autre part, dans des logements (20) prévus sur les wagons (15), les moyens de transport annexes (2) et les emplacements de stockage à des emplacements correspondant aux différentes dimensions des boîtes.

## Patentansprüche

1. Anlage zur automatischen Handhabung von durch Eisenbahnwagen (15) transportierten Behältern (16), umfassend wenigstens einen Hauptschienenweg (1), der sich längs einer Behälterlagerzone (3) erstreckt, und bewegliche Handhabungsmittel, geeignet, die Behälter zu ergreifen und sie zwischen den sich auf dem Hauptschienenweg (1) und der Lagerzone (3) befindenden Wagen zu bewegen, dadurch **gekenn****zeichnet,** daß die beweglichen Handhabungsmittel mehrere Verladebrücken (12) umfassen, geeignet, um sich in Verschiebung lediglich senkrecht zum Hauptschienenweg (1) zu bewegen, wobei jede Verladebrücke (12) mit einer Traverse (38) zur lediglich vertikalen Bewegung ausgerüstet ist und mit einer Anzahl von Greifvorrichtungen (28) für die Behälter (16) versehen ist, und daß die Anlage außerdem wenigstens einen Betriebsschienenweg (la) umfaßt, der parallel zum Hauptschienenweg (1) angeordnet ist und auf dem eine Anzahl von autonomen Pendelzügen (2) zwecks Bewegen der Behälter parallel zum Hauptschienenweg (1) und von einer Verladebrücke zur anderen fährt.

2. Anlage zur automatischen Handhabung nach Anspruch 1, dadurch **gekennzeichnet**, daß sie Positioniermittel (47) für die Wagen (15) umfaßt, die auf oder in der Nähe des Hauptschienenweges (1) angeordnet sind derart, daß jeder Wagen gegenüber einer bestimmten Verladebrücke angeordnet wird.

3. Handhabungsanlage nach den Ansprüchen 1 oder 2, dadurch **gekennzeichnet**, daß sie in mehrere Felder (4 bis 9) senkrecht zum Hauptschienenweg (1) entsprechend jedem Wagen (15) unterteilt ist, wobei jedes Feld eine Verladebrücke (12) und mehrere Lagerorte in der Lagerzone (3) umfaßt.

4. Handhabungsanlage nach Anspruch 3, dadurch **ge****kennzeichnet**, daß sämtliche Wagen (15) dieselbe Länge aufweisen, die auch derjenigen der autonomen Pendelzüge (2) und der Breite eines Feldes (4 bis 9) entspricht.

5. Handhabungsanlage nach einem beliebigen der vorhergehenden Ansprüche, geeignet für den Fall eines elektrifizierten Hauptschienenweges, der mit einer Kettenfahrleitung versehen ist, dadurch **gekennzeichnet**, sie Mittel zum Einziehen der Kettenfahrleitung während der Arbeitsgänge zur Handhabung der Behälter umfaßt.

6. Handhabungsanlage nach einem beliebigen der vorhergehenden Ansprüche, dadurch **gekennzeichnet,** daß sich die Verladebrücken (12) auf hochliegenden Rollbahnen (10) bewegen, die senkrecht zum Hauptschienenweg (1) vorgesehen sind und in einem Abstand etwa gleich der Länge eines Wagens (15) entfernt liegen.

7. Handhabungsanlage nach einem beliebigen der vorhergehenden Ansprüche, dadurch **gekennzeichnet,** daß sie Führungsmittel für die vertikale Bewegung der Traversen umfaßt, umfassend vertikale Laufschienen (40a), geeignet zum Zusammenwirken mit einziehbaren Führungslaufschuhen (41) während eines Teils der vertikalen Bewegung der Traverse, wobei die Wagen (15), die autonomen Pendelzüge (2) und die Lagerorte Zentrierungsführungen aufweisen, geeignet zum Zusammenwirken mit Führungsarmen (46), die mit den Traversen fest verbunden sind.

8. Anlage nach einem beliebigen der vorhergehenden Ansprüche, dadurch **gekennzeichnet,** daß jede Traverse (38) vier Paare schwenkbarer Klemmittel (28) umfaßt, geeignet zum Greifen der Behälter (16) mittels ihrer Unterseite.

9. Handhabungsanlage nach Anspruch 8, dadurch **ge****kennzeichnet,** daß die Handhabung der Behälter (16) durch Zwischenstücke (23) erfolgt, geeignet zum Eindringen einerseits in die Öffnungen (18) der Eckbeschlagstücke (17) der Behälter (16) und andererseits in auf den Wagen (15), den Pendelzügen (2) und den Lagerorten an den Stellen entsprechend den verschiedenen Abmessungen der Behälter (16) vorgesehene Aufnahmen (20).

10. Handhabungsanlage nach einem beliebigen der vorhergehenden Ansprüche, dadurch **gekennzeichnet**, daß sie Mittel zum automatischen Steuern der Bewegung der verschiedenen Verladebrücken (12) und deren Positionieren oberhalb eines Wagens, eines Pendelzuges oder eines Lagerortes nach Wahl; Mittel zum automatischen Steuern der vertikalen Bewegung der Traversen (38) und der Schwenkbewegung der Greifklemmittel (28); und Mittel zum automatischen Steuern der Bewegung der autonomen Pendelzüge (2) von einem Feld zum anderen umfaßt.

11. Verfahren zur automatischen Handhabung von Behältern, die durch Eisenbahnwagen transportiert worden sind, die sich auf wenigstens einem sich längs einer Behälterlagerzone erstreckenden Hauptschienenweg (1) bewegen, dadurch **ge****kennzeichnet,** daß zum Bewegen der Behälter (16) zwischen den Wagen (15) und gewählten Orten der Lagerzone (3) :
- der oder die sich auf einem bestimmten Wagen oder an einem gewählten Lagerort befindende Behälter (16) von unten gegriffen wird und dieser lediglich senkrecht zum Hauptschienenweg (1) bewegt wird;
- der Behälter (16) auf einem Nebentransportmittel (2) abgesetzt wird, geeignet zur Bewegung parallel zum Hauptschienenweg (1);
- das Nebentransportmittel (2) gegenüber dem gewählten Ort der Lagerzone oder dem bestimmten Wagen bewegt wird; und
- der Behälter (16) erneut von unten gegriffen wird, um ihn lediglich senkrecht zum Hauptschienenweg (1) vom Nebentransportmittel (2) bis zum gewählten Ort der Lagerzone (3) oder dem bestimmten Wagen (15) zu bewegen;
- wobei diese Arbeitsgänge in einer unterschiedlichen Reihenfolge ausgeführt werden können.

12. Handhabungsverfahren nach Anspruch 11, dadurch **ge****kennzeichnet,** daß das Greifen der Behälter mittels Zwischenstücken (23) erfolgt, die geeignet sind, einerseits in die Öffnungen (18) der Beschlagteile (17) der Behälter (16) und andererseits in Aufnahmen (20) einzudringen, die auf den Wagen (15), den Nebentransportmitteln (2) und den Lagerorten an Orten entsprechend den verschiedenen Abmessungen der Behälter vorgesehen sind.

## Claims

1. Installation for automatic handling containers (16) transported by railway wagons (15), comprising at least one main railway track (1) extending along a storage zone (3) for containers and mobile handling means capable of gripping the containers and of moving them between the wagons being on the main railway track (1) and the storage zone (3), **characterised** in that the mobile handling means comprise plural travelling bridges (12) capable of moving in translation only perpendicularly to the main railway track (1), each travelling bridge (13) being equipped with a traverse (38) for only vertical displacement, provided with a plurality of gripping devices (28) for the containers (16) and that the installation further comprises at least one service railway track (1a) provided in parallel to the main railway track (1) and on which a plurality of autonomous shuttle trains (2) circulates with regard to the movement of the containers in parallel to the main railway track (1) and from one travelling bridge to the other.

2. Automatic handling installation according to claim 1, **characterised** in that it comprises positioning means (47) for the wagons (15) provided on or in the neighbourhood of the main railway track (1) such as to arrange each wagon in front of a determined travelling bridge.

3. Handling installation according to claims 1 or 2, **characterised** in that it is divided into plural fields (4 to 9) perpendicular to the main railway track (1) corresponding to each wagon (15), each field comprising a travelling bridge (12) and plural storage places in the storage zone (3).

4. Handling installation according to claim 3, **characterised** in that all wagons (15) have the same length which equally corresponds to that of the autonomous shuttle trains (2) and to the width of a field (4 to 9).

5. Handling installation according to any of the preceding claims, adapted to the case of an electric railway track provided with an overhead contact line, **characterised** in that it comprises retracting means for the overhead contact line during the operations of handling the containers.

6. Handling installation according to any of the preceding claims, **characterised** in that the travelling bridges (12) move on tracks (10) lying upward provided perpendicularly to the main railway track (1) and spaced at a distance aproximately equal to the length of a wagon (15).

7. Handling installation according to any of the preceding claims, **characterised** in that it comprises guiding means for the vertical moving of the traverses, comprising vertical slideways (40a) capable of cooperating with retractable guiding shoes (41) during part of the vertical movement of the traverse, the wagons (15), the autonomous shuttle trains (2) and the storage places having centering guides capable of cooperating with guiding arms (46) connected with the traverses.

8. Installation according to any of the preceding claims, **characterised** in that each traverse (38) comprises four pairs of pivoting clamps (28) adapted to grip the containers (16) by their bottom face.

9. Handling installation according to claim 8, **char****acterised** in that the handling of the containers (16) is effected by intermediates (23) capable of penetrating on the one hand into the orifices (18) of armatures (17) of the containers (16) and on the other hand into receptacles (20) provided on the wagons (15), the shuttle trains (2) and the storage places at places corresponding to the different dimensions of the containers (16).

10. Handling installation according to any of the preceding claims, **characterised** in that it comprises means for automatically controlling the movement of the different travelling bridges (12) and for positioning these above a wagon, a shuttle train or a storage place selected; means for automatically controlling the vertical movement of traverses (38) and the pivoting movement of the gripping clamps (28); and means for automatically controlling the movement of the autonomous shuttle trains (2) from one field to the other.

11. Method for automatic handling of containers transported by railway wagons moving on at least one main railway track (1) extending along a storage zone for containers, **characterised** in that for moving the containers (16) between the wagons (15) and selected places of the storage zone (3):
- the container(s) (16) being on the determined wagon or at a selected storage place is (are) gripped and it is moved only perpendicularly to the main railway track (1);
- the container (16) is deposited on a service transport means (2) capable of moving in parallel to the main railway track (1);
- the service transport means (2) is moved in face of the selected place of the storage zone or of the determined wagon; and
- the container is again taken at the bottom for moving it only perpendicularly to the main railway track (1) from the service transport means (2) to the selected place of the storage zone (3) or the determined wagon (15);
- these operations being capable of being made in a different order.

12. Handling method according to claim 11, **characterised** in that the gripping of the containers is made by means of intermediates (23) capable of penetrating on the one hand into the orifices (18) of the armatures (17) of the containers (16) and on the other hand into the receptacles (20) provided on the wagons (15), the service transport means (2) and the storage places at places corresponding to the different dimensions of the containers.
